# EUROPEAN PATENT APPLICATION

(11) **EP 1 530 074 A1**
(43) Date of publication of application: **11.05.2005**
(21) Application number: 04256746.1
(22) Date of filing: 02.11.2004
(51) Int. Cl.: G02F 1/1335

(54) **Transflective film and liquid crystal display device**

(30) Priority: 06.11.2003 JP 2003376674
(71) Applicant: ALPS ELECTRIC CO., LTD., Ota-ku Tokyo 145 (JP)
(72) Inventor: Yoshii, Katsumasa, c/o Alps Electric Co. Ltd., Ota-ku, Tokyo (JP)
(74) Representative: Kensett, John Hinton

(57) **Abstract**

There is provided a transflective film capable of efficiently reflecting incident external light and a liquid crystal display device employing the transflective film. Concave portions (31) of the transflective film have such a diameter that two or more concave portions can be disposed in a gap (t2) between an opening edge (32a) of an opening (32) and an edge (36a) of a pixel area (36). The diameter (D) (width) of the concave portions (31) may be, for example, 1 to 17 µm, and preferably 5 to 15 µm. By decreasing the diameter (D) of the concave portions (31) to such a degree that two or more concave portions can be disposed in the gap (t2) between the opening edge (32a) of the opening (32) and the edge (36a) of the pixel area (36), it is possible to enhance reflectance of the area interposed between the opening edge (32a) of the opening (32) and the edge (36a) of the pixel area (36) to the maximum. Therefore, it is also possible to enhance reflectance of the transflective film (12) to the maximum.

## Description

### BACKGROUND OF THE INVENTION

### 1. Field of the Invention

The present invention relates to a transflective film and a liquid crystal display device employing the transflective film.

### 2. Description of the Related Art

In portable electronic apparatuses such as mobile phones, portable game machines, etc., since battery driving time has a large influence on applicability thereof, a reflective liquid crystal display device capable of reducing power consumption is provided as a display unit. The reflective liquid crystal display device comprises, for example, a reflector totally reflecting external light incident from the front surface thereof or a reflector reflecting external light incident from the front surface and transmitting light of a backlight incident from the back surface thereof. In order to enhance a reflected-light ratio to the maximum, there has been known a reflector in which plural concave portions or convex portions are formed thereon (for example, see Patent Document 1).

[Patent Document 1] Japanese Patent Application Laid-open No. 2003-14912

Among the reflectors, specifically, a reflector reflecting the external light and transmitting back light from the back surface side is referred to as a transflective body. A transflective body developed by the inventors of the present invention forms a transflective film 101 by providing openings 103 corresponding to pixels 106 of a liquid crystal display panel in a part of a thin metal film in which a plurality of fine concave portions (dimples) 102 is formed on the surface thereof. The transflective film 101 transmits light from a lighting unit such as a backlight, etc. toward the liquid crystal display panel through the openings 103 and reflects the external light toward the liquid crystal display panel from reflection areas other than the openings 103. As a result, the liquid crystal display panel can be brightly illuminated by any light source of the external light and the lighting unit.

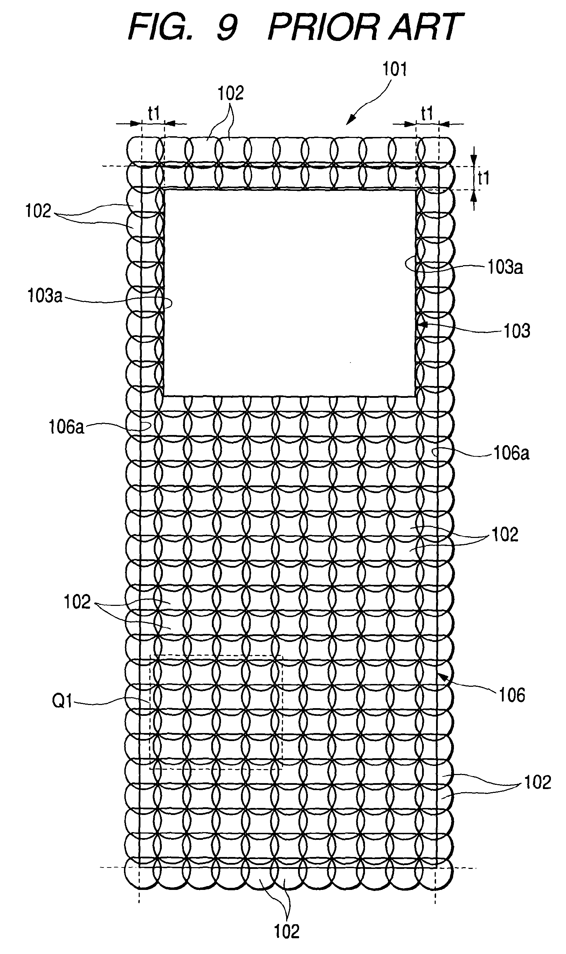

The fine concave portions 102 formed on the surface of the transflective film 101 developed by the inventors of the present invention and shown in Fig. 9 are to efficiently reflect the incident external light with a wide range when the external light incident through the liquid crystal display panel is reflected again toward the liquid crystal display panel. As indicated by a reference character Q1 in Fig. 9, the concave portions 102 are designed by the inventors of the present invention such that desired reflection ability is obtained in a unit of constant number of concave portions, for example, 9 concave portions 102 by 3×3.

However, in the conventional transflective film 101 described above, since the desired reflection ability is obtained in a unit of plural concave portions 102, for example, by 3×3, one or less concave portion 102 disposed in a gap t1 between circumferential edges 103a of the openings 103 and the edges 106a of the respective pixels 106 has a small degree contributing to reflection, so that there is a problem that reflection efficiency is not good. If the area corresponding to one or less concave portion 102 formed around each opening 103 does not contribute to the reflection, the illumination of the liquid crystal display panel by the external light may not be efficiently performed, thereby preventing enhancement of brightness of the liquid crystal display panel.

### SUMMARY OF THE INVENTION

The present invention is contrived to solve the above problems, and it is an object of the present invention to provide a transflective film capable of efficiently reflecting incident external light and a liquid crystal display device employing the transflective film.

In order to achieve the above object, there is provided a transflective film formed between a liquid crystal layer of a liquid crystal display panel and a lighting unit illuminating the liquid crystal display panel from the back surface side, in which a plurality of fine concave portions or convex portions is formed on the surface thereof and an opening transmitting light is formed at a position corresponding to each pixel of the liquid crystal display panel, wherein the concave portions or convex portions are formed with such a diameter that two or more concave portions or convex portions can be formed between a circumferential edge of each opening and an edge of each pixel.

It is preferable that the diameter of the concave portions or convex portions is set to a range of 1 to 17 µm. In addition, there is also provided a liquid crystal display device having the aforementioned transflective film, a lighting unit, and a liquid crystal display panel.

The transflective film has a predetermined reflection ability in a unit of constant numbers of concave portions or convex portions. However, according to the present invention, by setting the width of one concave portion or convex portion formed on the transflective film to be smaller than the gap between the opening edge and the pixel edge, it is possible to reduce the number of concave portions or convex portions not contributing to the reflection to the maximum. As a result, the number of units including a constant number of concave portions or convex portions and having a predetermined reflection ability can be increased to the maximum, so that it is possible to enhance reflectance of the transflective film to the maximum.

It is preferable that the diameter is set to a range of 1 to 17 µm. According to the liquid crystal display device comprising the transflective film, the lighting unit, and a liquid crystal display panel, it is possible to provide a liquid crystal display device capable of performing high-brightness and clear display, whether any one of the external light and the lighting unit is used as a light source.

Embodiments of the invention will now be described, by way of example only, with reference to the accompanying drawings, in which:
Fig. 1 is a cross-sectional view illustrating a liquid crystal display device comprising a transflective film according to the present invention;
Fig. 2 is an enlarged perspective view of the transflective film shown in Fig. 1;
Fig. 3 is a plan view illustrating the transflective film shown in Fig. 1, which corresponds to one pixel;
Fig. 4 is a partially-enlarged plan view illustrating the transflective film shown in Fig. 3;
Fig. 5 is a perspective view schematically illustrating a concave portion formed in the transflective film;
Fig. 6 is a cross-sectional view illustrating an inner-surface shape in a cross-section X of the concave portion shown in Fig. 5;
Fig. 7 is a graph illustrating an example of a reflection characteristic of the transflective film;
Fig. 8 is an enlarged perspective view illustrating another embodiment of the transflective film;
Fig. 9 is an enlarged plan view illustrating a conventional transflective film corresponding to one pixel;
Fig. 10 is a plan view illustrating an example of the transflective film used for verification of the present invention; and
Fig. 11 is a graph illustrating the verification result of the transflective film according to the present invention.

### DESCRIPTION OF THE PREFERRED EMBODIMENT

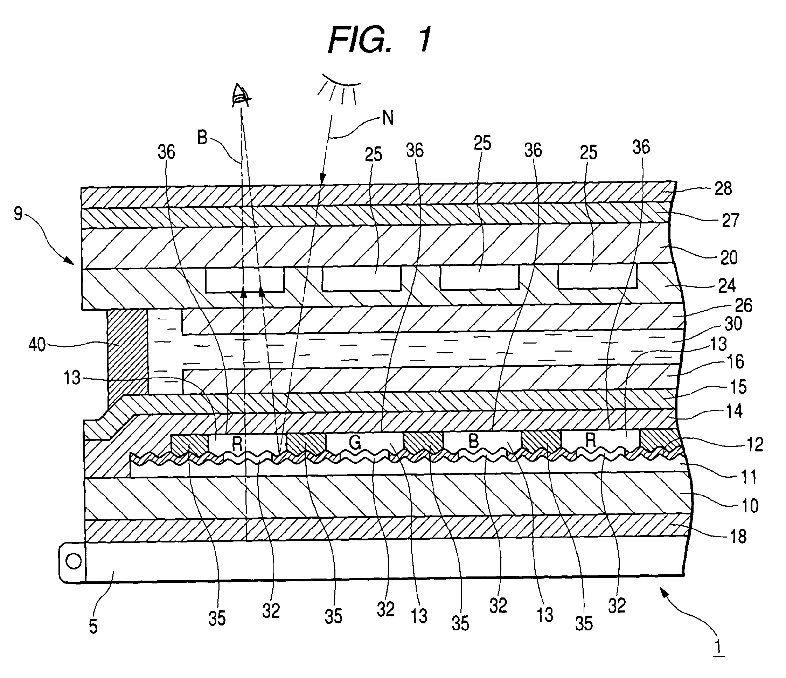

Hereinafter, embodiments of the present invention will now be described with reference to the drawings. Fig. 1 is an enlarged cross-sectional view schematically illustrating a liquid crystal display device having a transflective film according to the present invention.
The liquid crystal display device 1 comprises a liquid crystal display panel 9 unified by bonding a first substrate 10 and a second substrate 20, which are made of transparent glass, etc. and are opposite to each other with a liquid crystal layer 30 therebetween, with a seal member 40 provided in a ring shape in circumferential edge portions of the two sheets of substrates 10 and 20, and a backlight 5 as a lighting unit.

At the liquid crystal layer 30 side of the first substrate 10, an organic film 11 for forming concave portions (dimples) 31 on a reflective film 12, a transflective film 12 reflecting light incident on the liquid crystal display device and transmitting light from the backlight 5, color filters 13 for performing color display, an over-coating film 14 for covering and protecting the organic film 12 and the transflective film 12 and planarizing unevenness resulting from the organic film 11 or the color filter 13, an electrode layer 15 for driving the liquid crystal layer 30, and an alignment film 16 for controlling alignment of liquid crystal molecules are sequentially stacked. At the liquid crystal layer 30 side of the second substrate 20, an electrode layer 25, an over-coating film 24, and an alignment film 26 are sequentially stacked.

The color filters 13 may be formed, for example, in patterns where three primary colors R, G, and B of light are repeated. In order to prevent color mixture of light between adjacent color filters 13, light-shielding walls 35, which are generally referred to as black matrixes, are formed between the color filters 13. Each area partitioned by the light-shielding walls 35 forms a pixel area 36.

A polarizing film 18 is provided at the opposite side (the outer surface side of the first substrate 10) of the liquid crystal layer 30 side of the first substrate 10 and a retardation film 27 and a polarizing film 28 are stacked in that order at the opposite side (the outer surface side of the second substrate 20) of the liquid crystal layer 30 side of the second substrate 20. Outside the polarizing film 18 of the first substrate 10, the backlight 5 as a lighting unit for performing transmission display in the liquid crystal display device 1 is provided.

The organic film 11 is provided to transfer concave portions 31 to the transflective film 12 formed thereon and thus to efficiently scatter reflected light. In this way, by forming the concave portions 31 on the transflective film 12, incident external light onto the liquid crystal display device 1 can be efficiently reflected, so that it is possible to realize bright display during illumination through reflection of the external light.

The transflective film 12 is made of a high-reflectance thin metal film such as aluminum, etc. Openings 32 are formed in the transflective film 12 correspondingly to the respective pixels. The openings 32 are intended to allow the light irradiated from the backlight (lighting unit) 5 to pass through the transflective film 12 made of a thin metal film, etc.

Since the liquid crystal display device 1 is constructed as described above, when external light N is incident on the liquid crystal display panel 9 at outdoors during the daytime, the external light is reflected by reflection areas other than the openings 32 of the transflective film 12 made of a thin metal film, etc. to illuminate the liquid crystal display panel 9. On the other hand, when the backlight 5 is turned on under environment lacking external light such as the nighttime, the dark room, etc., light B irradiated from the backlight 5 passes through the openings 32 of the transflective film 12 to illuminate the liquid crystal display panel 9. In this way, in the liquid crystal display device 1, it is possible to illuminate the liquid crystal display panel 9 through operation of the transflective film 12, even when any one of the external light and the backlight 5 is used as a light source.

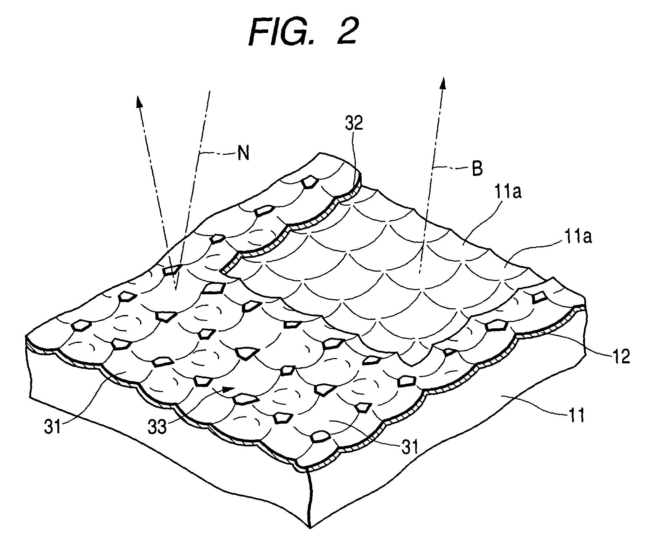

Fig. 2 is a perspective view illustrating a part including the organic film 11 and the transflective film 12 formed thereon. As shown in the figure, a plurality of concave portions 11a of which each inner surface forms a part of a spherical surface is horizontally superposed and continuously formed on the surface of the organic film 11, and the transflective film 12 is stacked on the surface. By means of the concave portions 11a formed on the surface of the organic film 11, the concave portions 31 are formed on the transflective film 12. The openings 32 of a rectangular shape are formed in parts of the transflective film 12. The openings 32 may be formed, for example, using an etching process.

According to the above structure, the transflective film 12 can transmit the light from the backlight 5 through the openings 32 and can also efficiently reflect the external light N at the reflection areas 33 in which the plurality of concave portions 31 is formed.

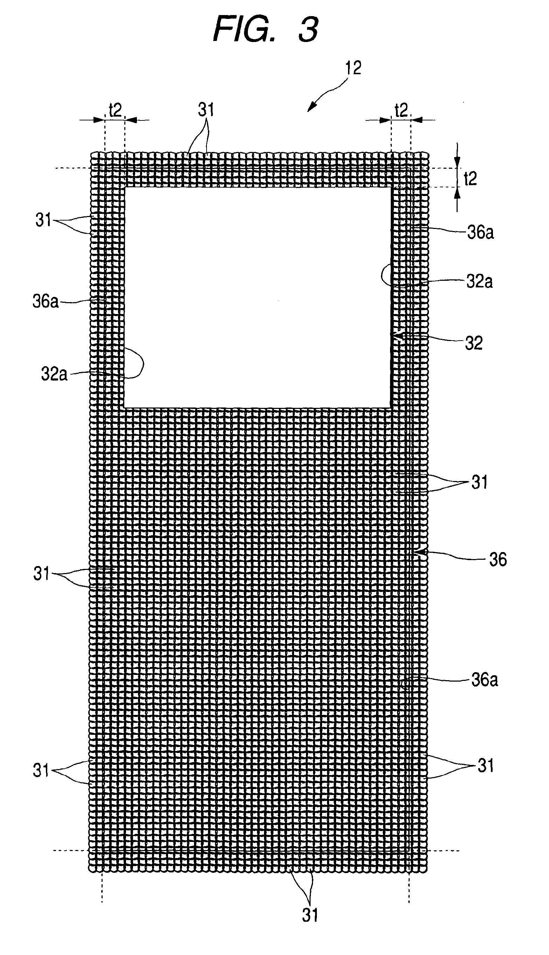

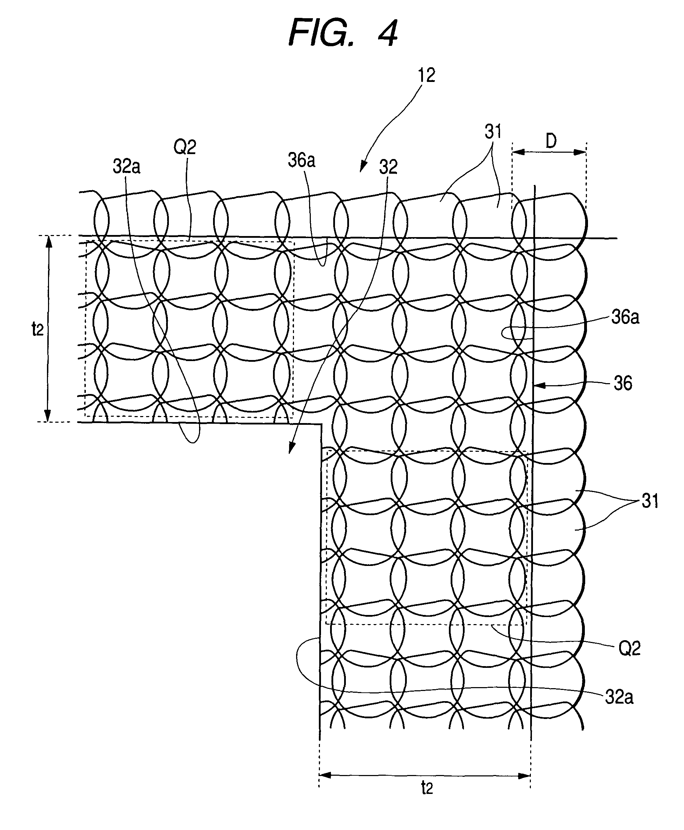

Fig. 3 is a plan view illustrating a detailed shape of the transflective film shown in Fig. 2 and corresponding to one pixel area as seen in a plan view, and Fig. 4 is a partially-enlarged view thereof. In the opening 32 formed in the transflective film 12, the aperture ratio thereof to the surface area of one pixel area 36 is preferably 25 to 80 %, and may be set, for example, to 35 %. The concave portions 31 are set to have such a diameter that two or more concave portions can be disposed in a gap t2 between the opening edge 32a of the opening 32 and the edge 36a of the pixel area 36. In this case, t2 is preferably 3 to 40 µm, and the diameter D (width) of the concave portions 31 may be set to have such a size that two concave portions can be disposed in the gap t2, for example, 1 to 17 µm, and more preferably 5 to 15 µm.

As indicated by a reference character Q2 in Fig. 4, the transflective film 12 exhibits a desired reflection ability in a unit of constant numbers of concave portions 31, for example, 4 concave portions by 2×2 or more. Accordingly, when the diameter D of the concave portions 31 is set to have such a size that one or less concave portion can be formed in the gap t2 between the opening edge 32a and the edge 36a of the pixel area 36, the ratio of the concave portions 31 contributing to the reflection is reduced, thereby causing deterioration of reflectance.

Therefore, by decreasing the diameter D of the concave portions 31 to such a degree that two or more concave portions can be disposed in the gap t2 between the opening edge 32a of the opening 32 and the edge 36a of the pixel area 36, it is possible to enhance reflectance of the area interposed between the opening edge 32a of the opening 32 and the edge 36a of the pixel area 36 to the maximum. Therefore, it is also possible to enhance reflectance of the transflective film 12 to the maximum.

The concave portions 31 may have, for example, an inner-surface shape of a spherical shape. In this case, it is preferable that the depth thereof is formed at random, for example, within a range of 0.1 µm to 3 µm and the inclination angle of the inner surface of the concave portions 31 is set to a range of -30° to +30°. Specifically, it is important that the inclination angle of the inner surface of the concave portions 31 is distributed within a range of -30° to +30° and that a pitch between adjacent concave portions 31 is set at random in all plane directions. This is because there is a disadvantage that an interference color of light appears and thus the reflected light is colored when the pitch between the adjacent concave portions 31 has regularity.

If the inclination angel distribution of the inner surface of the concave portions 31 exceeds the range of -30° to +30°, the divergence angle of the reflected light has excessively increased and the reflection intensity thereof has decreased, so that bright display is not obtained (that is, the divergence angle of the reflected light becomes 36° or more in the air and the peak of the reflection intensity inside the liquid crystal display device decreases. Thus, the total reflection loss increases.). If the depth of the concave portions 31 exceeds 3 µm, the tips of convex portions are not completely covered with a planarizing film (over-coating film 14) when the concave portions 31 are planarized in the next process, and thus desired flatness is not obtained, thereby causing display unevenness.

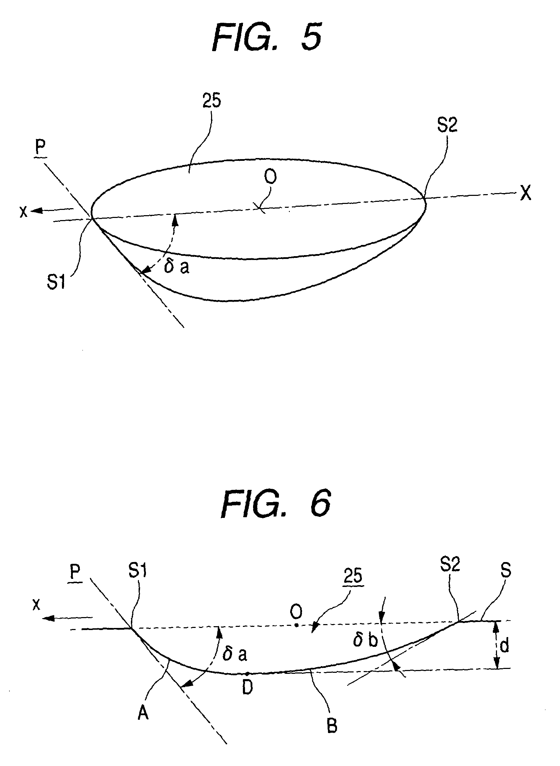

The inner surfaces of the concave portions 31 may have an asymmetric spherical shape. For example, as shown in Figs. 5 and 6, the inner-surface shape in a specific cross-section X of a concave portion 31 formed in the transflective film 12 has a curved-line shape with a first curved line A extending from one circumferential edge S1 of the concave portion 31 to the deepest point D and a second curved line B extending from the deepest point D to the other circumferential edge S2 successively to the first curved line A. The curved lines A and B have an inclination angle of zero about the flat plane S and are connected to each other at the deepest point D of the concave portion 31.

The inclination angle of the first curved line A about the flat plane S is larger than the inclination angle of the second curved line B, and the deepest point D is deviated in the x direction from the center O of the concave portion 31. That is, the average absolute values of the inclination angle of the first curved line A about the flat plane S are set to be greater than the average absolute value of the inclination angle of the second curved line B about the flat plane S. In the present embodiment, it is also preferable that the average absolute values of the inclination angles of the first curved lines A constituting a plurality of concave portions 31 are random values within a range of 1° to 89°. It is also preferable that the average absolute values of the inclination angles of the second curved lines B constituting the plurality of concave portions 31 are random values within a range of 0.5° to 88°.

Since the inclination angles of both curved lines A and B are gently varied from the circumferential edges of the concave portion 31 to the deepest point D, the maximum inclination angle δa (absolute value) of the first curved line A shown in Figs. 5 and 6 is set to be greater than the maximum inclination angle δb of the second curved line B. Since the inclination angle at the deepest point D, in which the first curved line A and the second curved line B are mutually met, about the flat plane S is zero, both curved lines A and B having the inclination angles different in positive and negative signs are gently connected at the deepest point D.

The maximum inclination angles δa of the concave portions 31 have random values, for example, within a range of 2° to 90°. However, the maximum inclination angles δa of the most concave portions 31 have random values within a range of 4° to 35°. The concave surface of the concave portion 31 shown in Figs. 5 and 6 has a single local minimum point (a point on a curved surface where the inclination angle is zero) D. The distance between the local minimum point D and the flat plane S forms the depth d of the concave portion 31, and the depths d of the plural concave portions 31 have random values within a range of 1 to 3 µm.

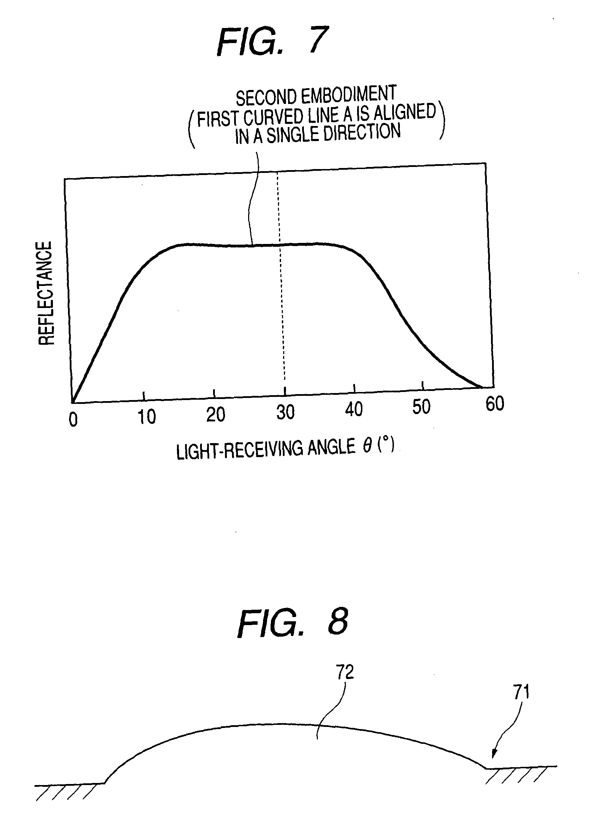

It is preferable that the first curved lines A of the plural concave portions 31 are aligned in a single direction or in a substantially-single direction. As a result, the direction of the reflected light reflected by the transflective film 12 can be varied from the direction of the specular reflection to a specific direction. Accordingly, since the reflectance in the reflection direction of the surface around the second curved line B is increased, a general reflection characteristic at the specific cross-section may be a reflection characteristic that the reflected light is concentrated in a specific direction. Fig. 7 shows a relation between a light-receiving angle θ (°) and brightness (reflectance), when the external light is irradiated at the incident angle of -30° to the transflective film in which the first curved lines A of the concave portion 31 are aligned in a single direction and the light-receiving angle is varied from a vertical-line position (0°) of the transflective film to 60° with 30° as the center which is the specular-reflection direction about the flat plane S.

As can be apparently seen from Fig. 7, in the transflective film in which the first curved lines A are aligned in a single direction, the reflection characteristic is excellent in a wide range of 10° to 40°, and the integrated value of reflectance at the light-receiving angle smaller than 30° which is the angle of the specular reflection about the flat plane S is set to be larger than the integrated value of reflectance at the light-receiving angle larger than the angle of the specular reflection.

In the aforementioned embodiment, the concave portions are formed in the transflective film, but it is also true as shown in Fig. 8 that a plurality of fine convex portions 72 is formed on the transflective film 71.

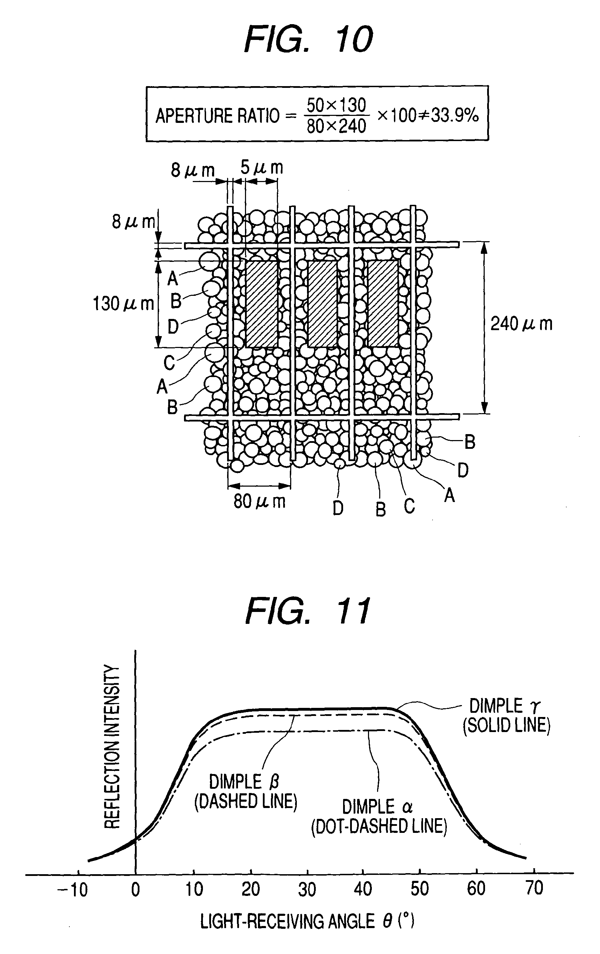

The applicant of the present invention verified the effect of the transflective film according to the present invention. As shown in Fig. 10, a transflective film 12, in which a rectangular opening 32 having an aperture ratio of 33.9 % to the surface area of a pixel are 36 is formed in a portion corresponding to each pixel area 36 of 240×80 µm partitioned by light-shielding walls (black matrixes) 35, was used for the verification. The gap t2 between the opening edge 32a of the opening 32 and the edge 36a of the pixel area 36 was set to 11 µm.

For the transflective film used for the verification, three kinds of measurement samples (transflective films) α, β, and γ of which the radii of curvature of the concave portions 31 were set to 40 µm, 27.5 µm, and 24 µm, respectively were prepared, as shown in Table 1. Concave portions 31 having four kinds of diameters of A to D shown in Fig. 10 were formed in the measurement samples α, β, and γ, respectively. That is, by changing the insertion depth of the front tips of pressing members having the radii of curvature for forming the concave portions 31 into four steps, the concave portions 31 having four kinds of diameters A to D were formed respectively. Here, the four kinds of diameters A to D were set small with decrease in the radii of curvature. That is, in the measurement sample α having a curvature radius of 40 µm, the four kinds of diameters A to D were set to a range of 16 to 25 µm. In the measurement sample β having a curvature radius of 27.5 µm, the four kinds of diameters A to D were set to a range of 8 to 17 µm. In the measurement sample γ having a curvature radius of 24 µm, the four kinds of diameters A to D were set to a range of 5 to 15 µm.

**[Table 1]**

| | RADIUS OF CURVATURE (µm) | DIAMETER OF PRESSED MARK (DIAMETER OF DIMPLE)/µm | | | |
|---|---|---|---|---|---|
| | | A | B | C | D |
| α | 40 | 25 | 22 | 20 | 16 |
| β | 27.5 | 17 | 14 | 11 | 8 |
| γ | 24 | 15 | 13 | 9 | 5 |
| * In each case, dimples A to D are combined at random. | | | | | |
| * The radii of curvature are varied, respectively, such that the maximum inclination should be 18°. | | | | | |

A graph showing the reflection intensities measured while continuously varying the light-receiving angle using the aforementioned measurement samples α, β, and γ is illustrated in Fig. 11. Further, Fig. 11 shows a theoretical reflection intensity. According to the measurement result shown in Fig. 11, as the curvature radii of the concave portions 31 in the transflective film are decreased and the diameters of the concave portions 31 are decreased as a result, it has been known that the reflection intensity is increased as a whole. From this result, when t2 is 11 µm, it has been known that the radius of curvature is set to be smaller and that the diameters of the concave portions or convex portions are preferably set to a range of 5 to 25 µm, more preferably a range of 5 to 17 µm, and most preferably a range of 5 to 15 µm.

## Claims

1. A transflective film formed between a liquid crystal layer of a liquid crystal display panel and a lighting unit illuminating the liquid crystal display panel from the back surface side, in which a plurality of fine concave portions or convex portions are formed on the surface thereof and an opening transmitting light is formed at a position corresponding to each pixel of the liquid crystal display panel,
wherein the concave portions or convex portions are formed with such a diameter that two or more concave portions or convex portions can be formed between a circumferential edge of each opening and an edge of each pixel.

2. The transflective film according to Claim 1, wherein the diameter of the concave portions or convex portions is set to a range of 1 to 17 µm.

3. The transflective film according to Claim 1, wherein the opening has an aperture ratio of 25 to 80 % to a surface area of one pixel area.

4. The transflective film according to Claim 1, wherein a gap between the circumferential edges of the opening and the edges of the respective pixel is set to a range of 3 to 40 µm.

5. The transflective film according to Claim 1, wherein inclination angles of inner surfaces of the concave portions and outer surfaces of the convex portions are distributed within a range of -30° to +30°.

6. The transflective film according to Claim 1, wherein the depth of the concave portions and the height of the convex portions are set to a range of 0.1 µm to 3 µm.

7. The transflective film according to Claim 1, wherein inner-surface shapes of the concave portions and outer-surface shapes of the convex portions are an asymmetric spherical-surface shape.

8. The transflective film according to Claim 1, wherein inner surfaces of the concave portions and outer surfaces of the convex portions have a curved shape having a first curved line and a second curve, and an inclination angle of the first curved line about the surface of the liquid crystal display panel is larger than that of the second curve.

9. The transflective film according to Claim 8, wherein the first curved lines are aligned in a single direction or a substantially-single direction.

10. The transflective film according to Claim 1, wherein the transflective film has a reflection characteristic that an integrated value of reflectance at a light-receiving angle smaller than an angel of specular reflection is greater than an integrated value of reflectance at a light-receiving angle larger than the angle of specular reflection.

11. The transflective film according to Claim 1, wherein curvature radii of the concave portions and convex portions are set to a range of 24 µm to 40 µm.

12. A liquid crystal display device comprising the transflective film according to Claim 1, a lighting unit, and a liquid crystal display panel.
